# EUROPEAN PATENT APPLICATION

(11) **EP 2 148 086 A1**
(43) Date of publication of application: **27.01.2010**
(21) Application number: 09165956.5
(22) Date of filing: 21.07.2009
(51) Int. Cl.: F03B 3/00, F03B 17/02

(54) **Apparatus for the production of electrical energy**

(30) Priority: 24.07.2008 IT MI20081342
(71) Applicant: Giavotto, Angelo, 15066 Gavi (AL) (IT)
(72) Inventor: Giavotto, Angelo, 15066 Gavi (AL) (IT)
(74) Representative: Mittler, Enrico

(57) **Abstract**

An apparatus is described for producing electric energy comprising a wheel (1) with a plurality of paddles (2) which is immersed in a liquid and rotatable about a fixed central part (3), a plurality of containers (6) for containing air or liquid which are carried by the ends of said paddles and each comprising a first (61) and a second (62, 620) opening opposite to each other, first valve means (161) adapted for closing or opening said first opening, means (7) for producing compressed air adapted for filling with air at least one container arranged in ascending rotation position, with said first valve means of said lower container closed and with the output of a jet of liquid from said second opening of the container in ascending rotation position. The first valve means are open in descending rotation position of the container for filling with the liquid and with the output of a jet of air from said second opening of the container in descending rotation position. The apparatus comprises means (9) capable of exploiting the rotation of the wheel with paddles for generating electrical energy. (Fig. 1).

## Description

The present invention concerns an apparatus for the production of electrical energy.

Generators of electrical energy are known in the state of the art which exploit various sources of energy, such as wind apparatuses which exploit the action of the wind for creating electrical energy, hydroelectric generators and electric generators using solar energy.

In view of the state of the art, the object of the present invention is to provide an apparatus for the production of electrical energy which is different from known apparatuses.

In accordance with the present invention, said object is achieved by means of an apparatus for producing electrical energy characterized by comprising a wheel with a plurality of paddles which is immersed in a liquid and rotatable about a fixed central part, a plurality of containers for containing air or said liquid which are carried by the ends of said paddles and which each comprise a first and a second opening opposite to each other, first valve means suitable for closing or opening said first opening, each container of said plurality of containers being suitable for assuming an ascending rotation position and a descending rotation position, said apparatus comprising means for producing compressed air capable of filling with air at least one container of said plurality of containers when said container assumes an ascending rotation position, with said first valve means of said at least one container closed and with the output of a jet of liquid from said second opening of the container so as to determine the rotation of the wheel, said first valve means being open when said container is in descending rotation position for filling with the liquid and with the output of an air jet from said second opening of the container, said apparatus comprising means suitable for exploiting said rotation of the wheel with paddles for generating electric energy.

The characteristics and advantages of the present invention will become evident from the following detailed description of a practical embodiment of it, which is illustrated by way of non-limiting example in the attached drawings, in which:
figure 1 is a schematic front view of the apparatus for the production of electrical energy in accordance with an embodiment of the present invention;
figure 2 is a schematic lateral view of the apparatus shown in figure 1;
figure 3 is a schematic front view of a variant of the embodiment of the apparatus shown in figure 1;
figure 4 shows views of the valves and of the central part of the apparatus shown in figure 1;
figure 5 is a schematic front view of a further variant of the embodiment of the apparatus shown in figure 1;
figure 6 is a schematic lateral view of the apparatus shown in figure 5;
figure 7 is a schematic front view in more detail of the apparatus shown in figure 5;
figure 8 shows a container used in the apparatus shown in figure 5;
figure 9 is a schematic front view of an apparatus for the production of electrical energy in accordance with another embodiment of the present invention;
figure 10 shows a particular of the apparatus in figure 9.

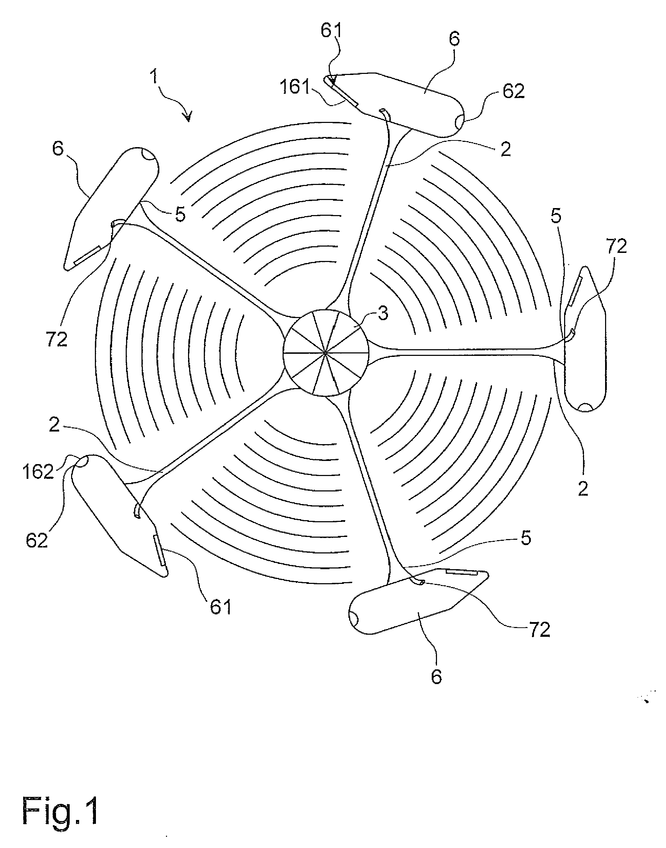

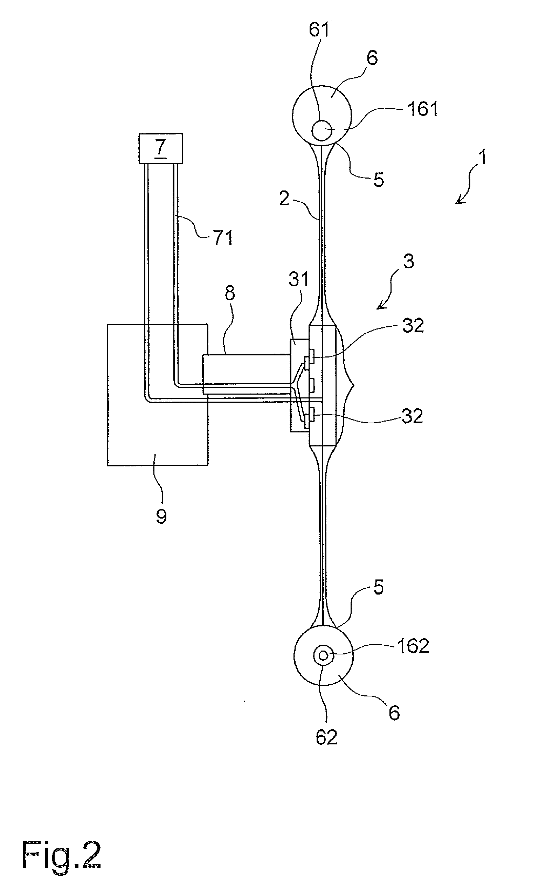

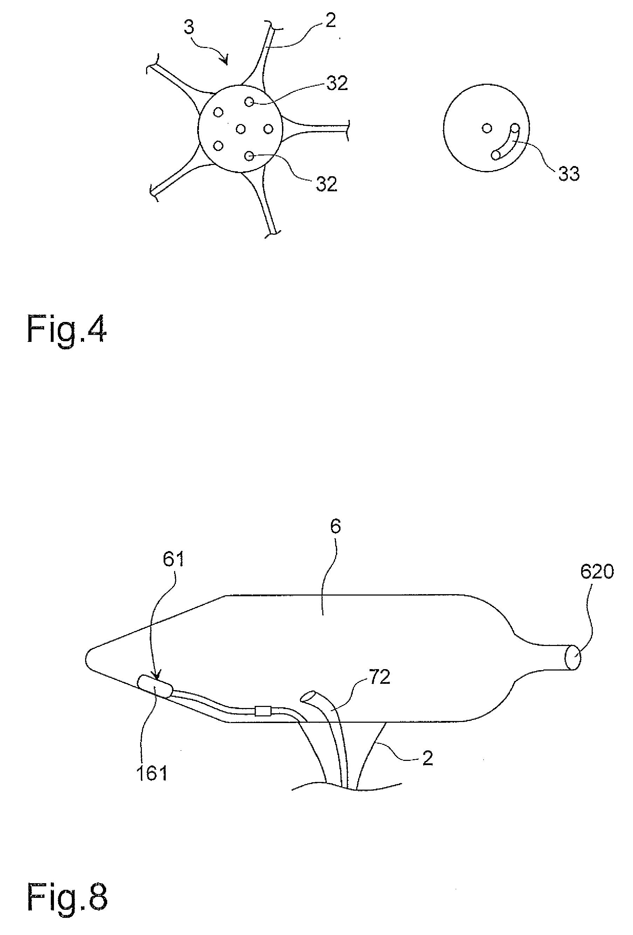

Figures 1-2 and 4 show the apparatus for the production of electrical energy in accordance with the present invention. Said apparatus comprises a wheel 1, preferably with horizontal axis of rotation, composed of a plurality of paddles 2 and totally immersed in a liquid, preferably still water. The plurality of paddles 2, preferably five in number, have an end in common, i.e. the centre of the wheel 3, and carry at their ends 5 a container 6.

The containers 6 are constructed of light but robust material, and have an elongated aerodynamic shape preferably of torpedo form and are provided with openings 61, 62 normally closed by corresponding valves 161 and 162 at their respective front and rear ends.

The paddles 2 are also made of a light but robust material, have an aerodynamic shape and are hollow inside.

The centre of the wheel 3 is rotatably coupled to a fixed part 31 and has pneumatic valves 32 and areas 33 for the passage of the compressed air.

The apparatus comprises a device 7 capable of producing compressed air. By means of suitable pipes 71, the compressed air produced by the device 7 is conveyed through the fixed part 31 to the centre of the wheel 3 and, by means of other pipes 72 arranged inside the paddles 2, into the containers 6. The pneumatic valves 32 allow the ingress of the compressed air into at least one of the pipes 72 and therefore into at least one of the containers 6.

The operation of the apparatus is as follows.

When the containers 6 are about to begin the ascending rotation phase, they are normally full of water. They are filled with air by means of the compressed air coming from the device 7 by means of the pipes 71 and 72. The pneumatic valves 32 determine the filling with air of only the containers which are about to begin the ascending phase.

The container is emptied of water and filled with air; both the jet of water from the rear valve 162 and the filling with air allow its upward movement. This in its turn produces the rotatory movement of the wheel 1.

When the container 6 begins the descending rotation phase, the valve 61 opens to let the water enter and the valve 162 allows the air to be discharged.

The rotatory movement of the wheel 1 is multiplied by a multiplier 8 and said multiplied rotation is exploited for the production of electrical energy by known means 9 comprising a converter from mechanical energy into electrical energy.

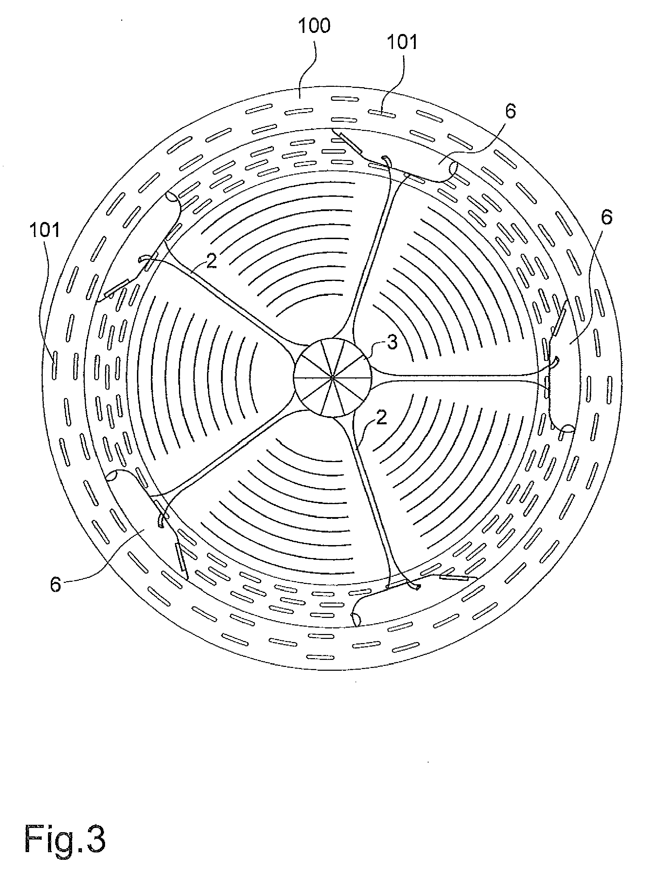

Figure 3 shows a variant to the embodiment of the apparatus in accordance with the present invention. Unlike in the apparatus shown in figure 1, an open plastic container 100, provided with slots 101, encloses the peripheral part of the wheel 1; this allows a reduction in the friction of the paddles 2 and of the containers 6 with the water.

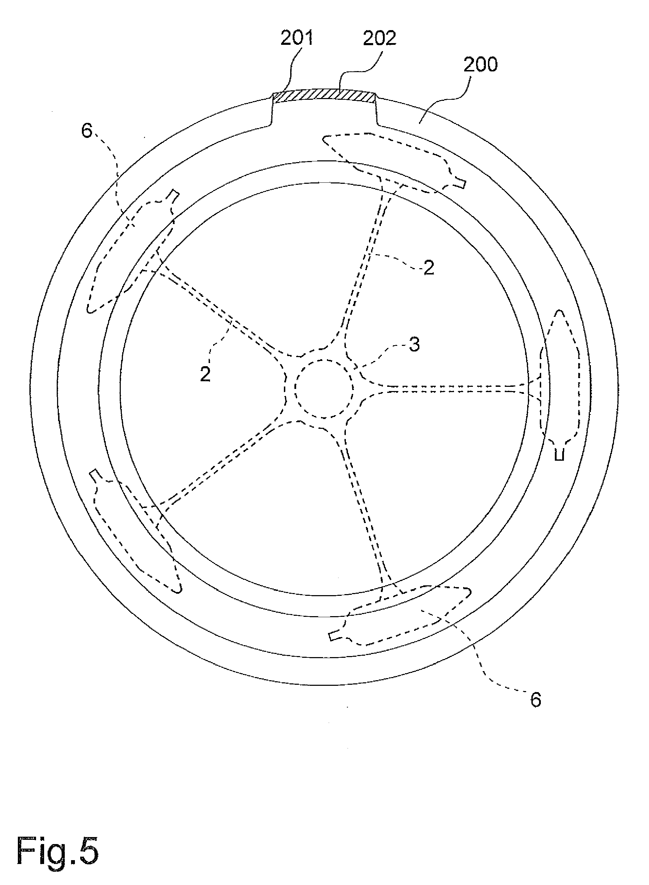

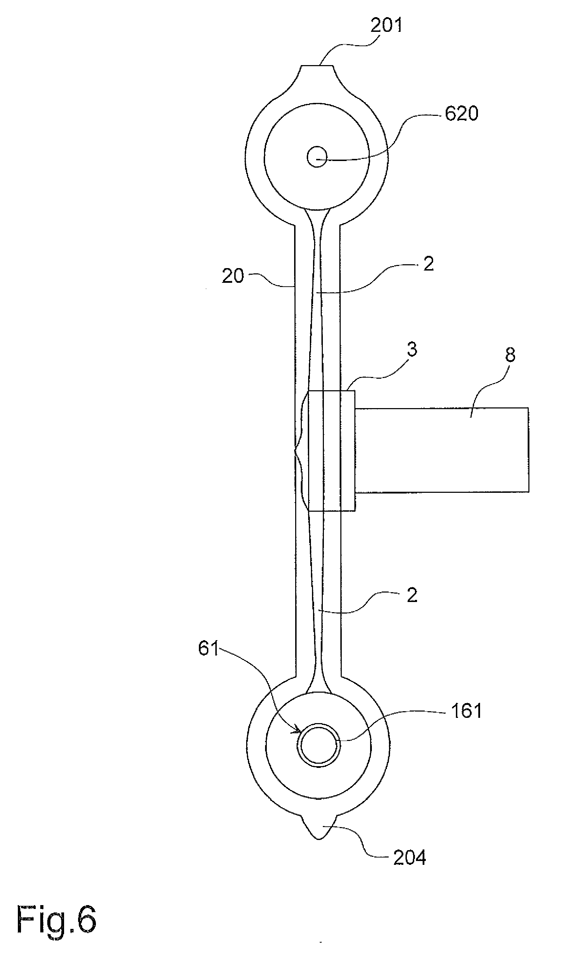

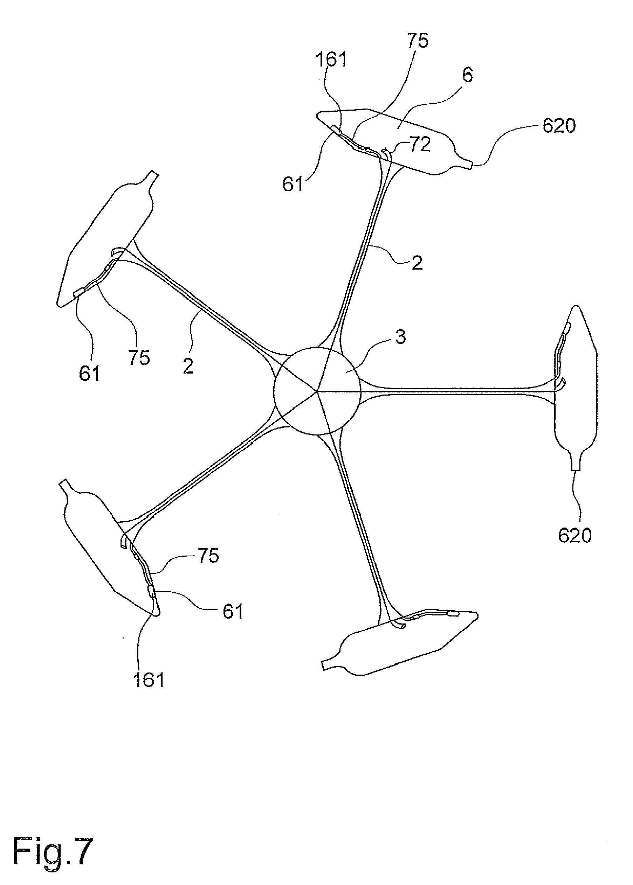

Figures 5-8 show a further variant of the embodiment of the apparatus in accordance with the present invention. Unlike in the apparatus shown in figure 1, a plastic container 200 encloses the wheel 1 completely and contains the water in which the wheel is immersed; the container 200 has an opening 201 for the output of air, closed by a cover 202 provided with slanting fins to hold the water inside the container 200.

The containers 6 are preferably constructed of fibreglass and are capable of containing about 500 litres of water or an equivalent volume of air. In the container 200 a circular corridor 204 is also provided for the output of the air in the descending phase and of the water in the ascending phase. Each container 6 no longer has the valve 162 but a rear shape made like a bottleneck with an opening 620 from which air exits with the container 6 in the descending phase and water with the container 6 in the ascending phase; from the opening in the container 6 which is normally closed by the valve 161, the water enters with the container 6 in the descending phase.

The valves 161 are mechanical valves of known type, controlled by compressed air. The outlets of the pipes 72 coming from the paddles 2, into which compressed air is fed, are arranged in front of the valves 161. The latter are driven by compressed air by means of small tubes 75; each valve 162 must be open for the entry of the water during the descending phase of the container 6.

The valves 161 and/or the valves 162 can also be of electrical or mechanical type.

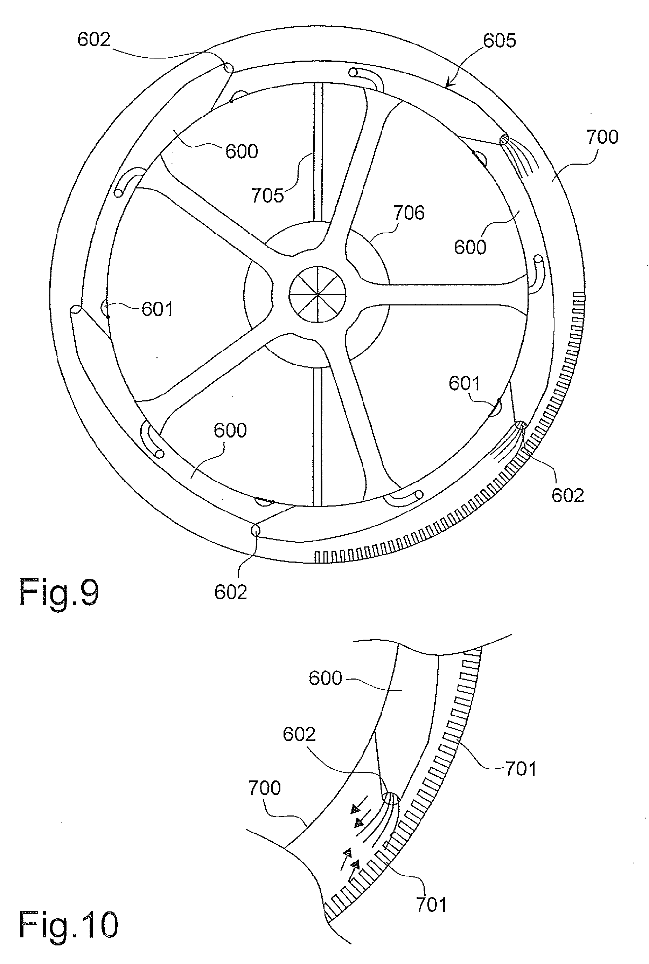

Figures 9-10 show the apparatus for the production of electrical energy in accordance with another embodiment of the present invention. The apparatus of Figures 9-10 differs from that of preceding figures for the presence of a plurality of containers 600 adjacent to each other and arranged to form a circular crown 605. Each container 600 is provided with a front opening adapted to be closed and open by means of an electric valve 601; the front opening must be open with the container in descending phase for the ingress of the water and must be closed in the ascending phase. The container 600 comprises a back opening adapted to be closed and open by means of an valve 602 of the pressure type; the back opening must be open in the ascending phase when the pressure of the air arrive at a prefixed value for allowing the output of the water.

The apparatus comprises a fixed shaped circular crown open recipient 700, preferably in rubber, adapted to contain the circular crown 605 and provided with a plurality of fins 701 arranged on the lower part of the internal wall of the recipient 700; the fins 701 are arranged perpendicular to the recipient and allow a more efficacious rotation of the wheel 1 because the water outputted from the opening 602, arranged on the top of the container 600 and next to the internal wall of the recipient 700, smashes on the fins 701.

The recipient is carried by means of arms 705 connected to a fixed part 706.

## Claims

1. Apparatus for producing electric energy **characterized by** comprising a wheel (1) provided with a plurality of paddles (2) which is immersed in a liquid and rotatable about a fixed central part (3), a plurality of containers (6, 600) for containing air or said liquid which are arranged at the ends of said paddles and each container comprising a first (61, 601) and a second (62, 602) opening opposite to each other, first valve means (161) adapted to close or open said first opening, each container of said plurality of containers being adapted to assume an ascending rotation position and a descending rotation position, said apparatus comprising means (7) for producing compressed air adapted to fill up with air at least one container of said plurality of containers, when said container assumes an ascending rotation position, with said first valve means of said at least one container closed and with the output of a liquid jet from said second opening of said container so as to determine the rotation of the wheel, said first valve means being open with said at least one container arranged at descending rotation position for the filling up with the liquid and with the output of an air jet from said second opening of the container, said apparatus comprising means (9) adapted to employ said rotation of the paddle wheel for producing electric energy.

2. Apparatus according to claim 1, **characterized in that** said second opening (62) is provided with second valve means (162) adapted to open and close said second opening respectively when said container assumes the ascending and descending rotation position.

3. Apparatus according to claim 1, **characterized in that** said first valve means are of mechanical type controlled by compressed air.

4. Apparatus according to claim 1, **characterized in that** said wheel comprises a movable central part rotatably coupled with said fixed central part, and by comprising pipes (72) inside said paddles for the flow of compressed air into said containers (6) and pneumatic valves (32) arranged in the fixed central part and in the movable central part and adapted to block or permit the compressed air flow into said pipes.

5. Apparatus according to claim 1, **characterized by** comprising a recipient (200) filled with liquid adapted to contain the complete wheel, said container comprising an opening (201) at the top for the output of the air.

6. Apparatus according to claim 1, **characterized by** comprising a shaped circular crown open recipient (100) adapted to contain said plurality of containers (6), said recipient being provided with slots (101).

7. Apparatus according to claim 1, **characterized in that** each container of said plurality of containers has a bottleneck part ending with said second opening (620).

8. Apparatus according to any one of the preceding claims, **characterized in that** said liquid is water.

9. Apparatus according to claim 2, **characterized in that** said first valve means (601) are of the electric type and the containers (600) of the a plurality of containers are arranged adjacent to each other and to form a circular crown.

10. Apparatus according to claim 9, **characterized by** comprising a shaped circular crown open recipient (700) adapted to contain said plurality of containers (6), said recipient (700) comprising fins (701) arranged inside the recipient, on the lower part and perpendicular to the recipient, said second opening (602) being arranged on the top of the container (600) and next to the shaped circular crown open recipient (700) so that the water outputted from the container (600) of the plurality of containers (600) smashes on the fins (701).
